# EUROPÄISCHE PATENTSCHRIFT

(11) **EP 0 412 085 B1**
(45) Veröffentlichungstag und Bekanntmachung des Hinweises auf die Patenterteilung: **12.10.1994**
(21) Anmeldenummer: 89902233.9
(22) Anmeldetag: 17.02.1989
(51) Int. Cl.: H04L 25/08, G06F 11/16

(54) **NETZWERKSCHNITTSTELLE**
NETWORK INTERFACE
INTERFACE DE RESEAU

(43) Veröffentlichungstag der Anmeldung: 13.02.1991
(73) Patentinhaber: ROBERT BOSCH GMBH, 70442 Stuttgart (DE)
(72) Erfinder: PETER, Cornelius, D-7583 Ottersweier (DE); DAIS, Siegfried, D-7016 Gerlingen (DE)
(86) Internationale Anmeldenummer: DE8900091
(87) Internationale Veröffentlichungsnummer: WO9009713

(56) Entgegenhaltungen:
- DE-A- 3 342 763
- GB-A- 2 029 172
- US-A- 4 068 105
- Patent Abstracts of Japan, Band 3, Nr. 5, (E-84) 18. Januar 1979; & JP, A, 53132934 (MITSUBISHI DENKI K.K.) 20. November 1978

## Beschreibung

### Stand der Technik

Die Erfindung betrifft eine Netzwerkschnittstelle eines Computer-Netzwerks nach der Gattung des Anspruchs 1.

Computer-Netzwerke werden immer häufiger eingesetzt, insbesondere auch im Kraftfahrzeugbau. Es sind insbesondere sogenannte Controller-Area-Network-Schnittstellen für Kraftfahrzeuge bekannt, die eine Vielzahl von Komponenten, Subsystemen und/oder Systemen verbinden. Die Informationen des Netzwerks laufen über zwei Busleitungen. Jeder Ausfall einer der beiden Signalleitungen durch Kurzschluß nach Masse oder zur Spannungsversorgung oder eine Unterbrechung der Leitungen hat zur Folge, daß das gesamte Netzwerk zusammenbricht. Dies ist auch dann der Fall, wenn ein Kurzschluß zwischen den beiden Busleitungen eintritt.

Es wurde vorgeschlagen (deutsche Patentanmeldung P 38 26 774) zur Erkennung und Abstellung eines globalen Fehlers auf den Signalleitungen des Multiplex-Bus' einen Zähler vorzusehen, mit dessen Hilfe im Betriebsfall ein Ausbleiben von Informationen auf den Signalleitungen erfaßt werden kann.

Aus der DE 33 42 763 Al ist eine Schaltungsanordnung zum Überwachen von symmetrischen Leitungen, über die binäre Signale mit zueinander inversen Signalpegeln übertragen werden, bekannt. Diese Schaltungsanordnung besteht aus zwei Komparatoren, deren Eingänge über zwei Widerstandsnetzwerke mit den beiden Busleitungen verbunden sind. Die Ausgänge beider Komparatoren sind auf ein Antivalenz-Gatter geführt. Mit dieser Schaltungsanordnung ist es möglich, einen Kurzschluß oder eine Unterbrechung einer Ader der Busleitungen sofort und ohne zusätzliche Prüfverfahren festzustellen. Es wird der Absolutwert der Differenz der Spannungspotentiale zwischen den beiden Busleitungen mit einem Referenzwert verglichen und ein Fehlersignal dann abgegeben, wenn der Differenzwert kleiner als der Referenzwert ist. Die Komparatoren der Schaltungsanordnung dienen im Normalbetrieb als Empfangskomparatoren zur Auswertung der über die beiden Busleitungen übertragenen Signale.

### Vorteile der Erfindung

Die erfindungsgemäße Netzwerkschnittstelle mit den in Anspruch 1 genannten Merkmalen hat demgegenüber den Vorteil, daß auch, wenn sich die Netzwerkschnittstelle in einem inaktivierten Beriebsmode "sleep-mode" befindet, ein Ausfall einer der Signal- bzw. Busleitungen eines Netzwerks durch Unterbrechung oder Kurzschluß erkannt werden kann und der Schnittstellenbetrieb aufrechterhalten werden kann. Insbesondere ist es möglich, eine Netzwerkschnittstelle, die sich im "sleep-mode" befindet, zu aktivieren, d. h. in den "wake-up-mode" zu bringen.

Besonders bevorzugt wird ein Ausführungsbeispiel einer Schaltung, die mindestens zwei Komparatoren aufweist, deren erster Eingang einer der Busleitungen und deren zweiter Eingang einer Bezugsspannung zugeordnet ist. Die Ausgänge der beiden Komparatoren sind mit einer Auswertungsschaltung verbunden. Eine derartige Netzwerkschnittstelle ist sehr einfach aufgebaut. Als Komparatoren können langsam arbeitende Bauteile verwendet werden, die dadurch sehr preiswert sind. Eine derartig aufgebaute Netzwerkschnittstelle zeichnet sich auch durch einen sehr niedrigen Ruhestrom aus.

Bevorzugt wird außerdem ein Ausführungsbeispiel, bei dem die Auswertungsschaltung als ODER-Gatter ausgelegt ist, dessen Ausgang bei Auftreten eines Flankenwechsels auf einer intakten Busleitung ein "Wake-up-Signal" abgibt. Durch dieses "Wake-up-Signal" wird der Netzwerkteilnehmer aus dem "sleep-mode" in den "Wake-up-Zustand" gebracht, d. h. aktiviert. Auch dieses Ausführungsbeispiel ist sehr preiswert realisierbar.

Weiterhin vorteilhaft ist, daß zur niederohmigen Referenzspannungsankopplung ein Operationsverstärker vorgesehen ist und daß weiterhin die Bezugsspannung über einen Spannungsteiler an die zweiten Eingänge der Komparatoren gelegt ist. Mit Hilfe des Spannungsteilers kann für die zweiten Eingänge der Komparatoren eine separate Bezugsspannung eingestellt werden. Dadurch, daß durch den Spannungsteiler ein Spannungs-Offset zwischen den zweiten Eingängen der Komparatoren gelegt wird, wird es möglich, daß auch bei einem Kurzschluß der Signal- bzw. Busleitungen des Netzwerks untereinander die Schaltungsanordnung ein "Wake-up-Signal" abgibt und der Schnittstellenbetrieb aufrechterhalten werden kann. Dadurch wird eine sehr hohe Betriebssicherheit, auch bei Auftreten von Störungen im Netzwerk, gewährleistet.

### Zeichnung

Ein Ausführungsbeispiel der Erfindung ist in der Zeichnung dargestellt und wird in der nachfolgenden Beschreibung näher erläutert. Es zeigen:
Figur 1 eine Netzwerkschnittstelle und
Figur 2 ein Bussystem mit n Teilnehmern eines Kraftfahrzeugs.

### Beschreibung des Ausführungsbeispiels:

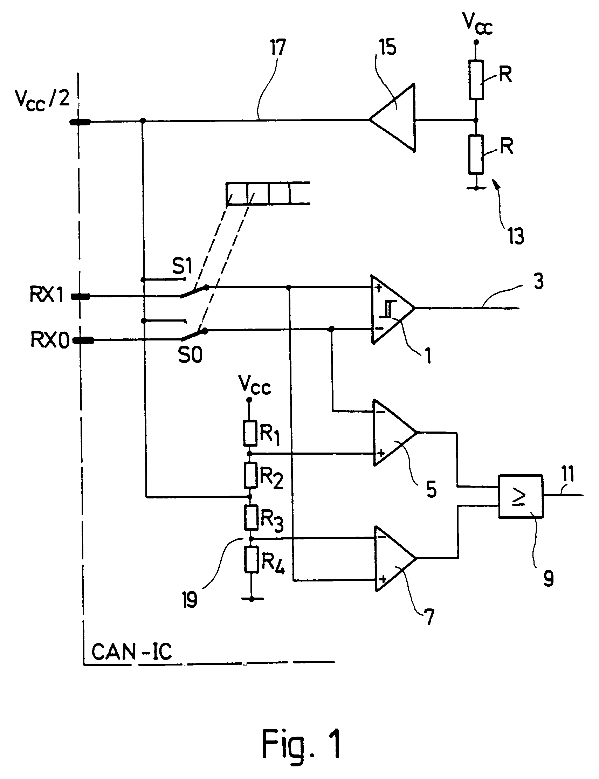

In Figur 1 ist lediglich ein Ausschnitt eines Netzwerkteilnehmers dargestellt, nämlich der Empfangsteil eines Controller-Area-Network-Bausteins (CAN-Bausteins).

An einer ersten Klemme RX1, die der Busleitung U- zugeordnet ist, ist ein erster Eingang eines Empfangskomparators angeschlossen. Der zweite Eingang dieses Komparators ist der Klemme RX0 zugeordnet, die mit der zweiten Busleitung U+ in Verbindung steht.

Auf der Ausgangsleitung 3 des Komparators 1 wird ein Empfangssignal abgegeben, das von dem Baustein ausgewertet wird.

Ein Baustein, wie er zum Teil in Figur 1 dargestellt ist, ist nicht dauernd aktiviert. Er findet sich zeitweise in einem inaktiven Zustand, im sogenannten sleep-mode. In diesem Betriebszustand ist die interne Logik des Bausteins stromlos. Lediglich eine spezielle Schaltung, die hier aus den Komparatoren 5 und 7 besteht, ist aktiviert. Sie dient dazu, die Schaltung des Bausteins bei Bedarf wieder zu aktivieren, in den sogenannten Wake-up-Zustand zu bringen.

Durch die Umschaltung vom wake-mode in den sleep-mode werden zum einen die Bausteine des Netzwerkteilnehmers bzw. der Schnittstelle geschont, zum anderen wird der Stromverbrauch des gesamten Netzwerkes wesentlich reduziert.

Der erste Komparator 5 der angesprochenen Schaltung ist bei dem ausgeführten Ausführungsbeispiel mit seinem invertierenden Eingang mit der Eingangsklemme RX0 verbunden. Sein nicht-invertierender Eingang ist mit einer Referenzspannung verbunden.

Der zweite Komparator 7 der genannten Schaltung ist einerseits, nämlich mit seinem nicht-invertierenden Eingang, mit der Eingangsklemme RX1 des Teilnehmers und andererseits mit seinem invertierenden Eingang mit einer Bezugsspannung verbunden.

Die Ausgänge der beiden Komparatoren sind mit einem ODER-Gatter 9 verbunden, dessen Ausgang Wake-up-Signal zur Aktivierung der Netzwerkschnittstelle abgibt.

Die Bezugsspannung wird bei dem in Figur 1 dargestellten Ausführungsbeispiel mittels eines Spannungsteilers 13 erzeugt, der einerseits an der Versorgungsspannung V_{cc} und andererseits an Masse liegt. Er weist zwei in Reihe liegende Widerstände R auf, an deren Verbindungsstelle ein Buffer-Operationsverstärker 15 angeschlossen ist, der der niederohmigen Spannungsankopplung dient. Der Ausgang 17 des Operationsverstärkers 15 ist an einer Ausgangsklemme V_{cc}/2 der Netzwerkschnittstelle angeschlossen. Diese Spannung V_{cc}/2 dient als Bezugsspannung der Komparatoren 5 und 7.

Diese Bezugsspannung kann unmittelbar den Komparatoren 5 und 7 zugeführt werden, d. h. also, an den nicht-invertierenden Eingang des ersten Komparators 5 und an den invertierenden Eingang des zweiten Komparators 7 gelegt werden.

Bei dem hier dargestellten Ausführungsbeispiel ist jedoch ein zweiter Spannungsteiler 19 vorgesehen, der hier aus vier in Reihe geschalteten Widerständen R1 bis R4 besteht. Er liegt einerseits an der Versorgungsspannung V_{cc} und andererseits an Masse. Der nicht-invertierende Eingang des ersten Komparators 5 ist nicht unmittelbar mit der Referenzspannung V_{cc}/2 verbunden, sondern über den Widerstand R2. Ebenso liegt der invertierende Eingang des zweiten Komparators nicht unmittelbar am Ausgang 17 des Operationsverstärkers 15. Es ist vielmehr ein Widerstand R3 zwischengeschaltet. Durch diese zwischengeschalteten Widerstände wird ein Spannungs-Offset zwischen den beiden Eingängen der Komparatoren 5 und 7 erzeugt. Durch eine geeignete Wahl der Widerstände R2 und R3 liegt das Potential des nichtinvertierenden Eingangs des Komparators 5 beispielsweise um 30 mV oberhalb der Referenzspannung V_{cc} und das Potential am invertierenden Eingang des zweiten Komparators 7 um 30 mV unterhalb der Referenzspannung.

Zwischen dem nicht-invertierenden Eingang des ersten Komparators 5 und der Versorgungsspannung V_{cc} liegt der Widerstand R1 und zwischen dem invertierenden Eingang des zweiten Komparators 7 und Masse der Widerstand R4.

Zwischen den ersten Eingang des Eingangskomparators 1 und die Klemme RX1 ist ein erster Schalter S1 und zwischen den zweiten Eingang des Eingangskomparators 1 und die Klemme RX0 ein zweiter Schalter S0 geschaltet. Die beiden Schalter werden von einem Statusregister geschaltet, das in der nicht vorveröffentlichten Patentanmeldung P 38 26 774 näher beschrieben ist. Bei beiden Schaltern handelt es sich um Umschaltkontakte, die im aktivierten Zustand den ersten Eingang des Komparators mit der auf der Leitung 17 liegenden Referenzspannung V_{cc}/2 bzw. bei Betätigung des Schalters S0 den zweiten Eingang des Komparators 1 an diese Referenzspannung legen.

Im folgenden wird die Funktion der Schaltung näher erläutert:

Mit Hilfe der die beiden Komparatoren 5 und 7 umfassenden Fehlererkennungsschaltung werden die Pegel an den Eingangsklemmen RX0 und RX1 mit der Referenzspannung am Ausgang 17 des Operators 15 verglichen.

Wenn eine der Signalleitungen U- oder U+ während des sleep-modes ausfällt, d. h. unterbrochen wird oder ein Kurzschluß nach Masse oder zur Versorgungsspannung eintritt, so wird durch die Komparatoren 5 und 7 der Fehlererkennungsschaltung ein Wake-up-Signal an das ODER-Gatter 9 abgegeben, sobald ein Flankenwechsel auf der noch intakten Busleitung eintritt. Dadurch wird ein Wake-up-Signal am Ausgang 11 des ODER-Gatters erzeugt.

Es ist auch denkbar, daß durch den Kurzschluß auf einer der Busleitungen ein Flankenwechsel an einem der Komparatoren 5 oder 7 zu einem Komparatorausgangssignal führt, wodurch das ODER-Gatter ein Wake-up-Signal auf der Ausgangsleitung 11 abgibt.

Für den Fall, daß ein Kurzschluß der beiden Busleitungen untereinander während des sleep-modes erfaßt werden soll, ist der Spannungs-Offset durch den zweiten Spannungsteile 19 vorgegeben. Bei einem derartigen Kurzschluß gibt einer der beiden Komparatoren 5 oder 7 ein Ausgangssignal an die Auswertungsschaltung bzw. das ODER-Gatter 9 ab, so daß ein Wake-up-Signal auf dessen Ausgangsleitung 11 auftrifft.

Für den Fall, daß ein Kurzschluß der Busleitungen untereinander nicht erkannt zu werden braucht, kann auf den Spannungsteiler 19 verzichtet werden. Der Ausgang 17 des Operators 15 kann dann unmittelbar mit dem nicht-invertierenden Eingang des Komparators 5 bzw. mit dem invertierenden Eingang des Komparators 7 verbunden werden.

Es zeigt sich also, daß mit der in der Patentanmeldung DE-A-38 26 774 beschriebenen Schaltung ein während des Betriebs des Bus- bzw. Netzwerkteilnehmers eintretender Fehlerfall, also ein Kurzschluß einer der Busleitungen untereinander bzw. nach Masse oder zur Versorgungsspannung, erkannt werden kann. Wenn jedoch dieser Busteilnehmer in den sogenannten sleep-mode gebracht und damit inaktiviert wird, ist diese Schaltung nicht mehr in der Lage, Fehler zu erkennen, die in dieser Betriebsphase eintreten. Es ist also nach dem Eintritt eines Fehlers nicht möglich, den im sleep-mode befindlichen Netzwerkteilnehmer zu aktivieren und in den wake-up-mode zu bringen.

Eine Netzwerkschnittstelle mit einer in Figur 1 dargestellten Schaltung kann dagegen auch dann aktiviert bzw. in den wake-up-mode gebracht werden, wenn auf einer der Busleitungen U- und U+ ein Fehler auftritt, während sich der Netzwerkteilnehmer im sleep-mode befindet.

Nach der Aktivierung des Netzwerkteilnehmers durch durch das Wake-up-Signal am Ausgang 11 des ODER-Gatter 9 kann die in der Patentanmeldung DE-A- 38 26 774 beschriebene Fehlererkennung und -eliminierung eingreifen.

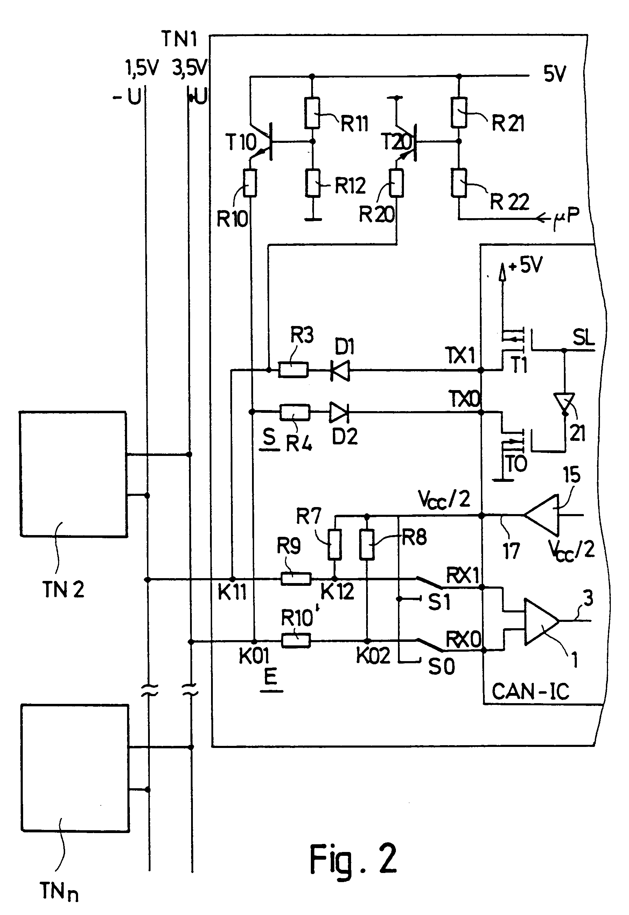

Figur 2 zeigt ein Netzwerk, beispielsweise ein Kraftfahrzeug-Bussystem mit n Teilnehmern. Bei dem Teilnehmer 1 ist die Busankopplung genauer dargestellt.

Der Teilnehmer 1 ist hier beispielhaft als sogenannter Master-Knoten ausgebildet, d. h., er weist ein Abschlußnetzwerk mit Emitter-Folgern T10 und T20 auf.

Der als Transistor ausgelegte erste elektronische Schalter T10 ist der Busleitung U+ zugeordnet. Er liegt mit einem Kollektor an einer Versorgungsspannung mit beispielsweise 5V. Sein Emitter ist über einen Widerstand R10 mit einem Knotenpunkt K01 und damit mit der Busleitung U+ verbunden. Die Basis des Transistors T10 liegt an der Verbindungsstelle zweier Widerstände R11 und R12, die einen zwischen der Versorgungsspannung und Masse liegenden Spannungsteiler bilden.

Bei dem hier dargestellten Ausführungsbeispiel hat der Widerstand R10 einen Widerstandswert von 2kΩ, der Widerstand R11 von 33kΩ und R12 von 150kΩ.

Der zweite elektronische Schalter des Abschlußnetzwerks ist ebenfalls als Transistor T20 ausgelegt, dessen Kolektor an Masse und dessen Emitter über einen Widerstand R20 mit einem Knoten K11 und mit der Busleitung U- verbunden ist. Die Basis des Transistors T20 liegt an der Verbindungsstelle zweier Widerstände R21 und 22, die einen Spannungsteiler bilden. Dieser liegt einerseits an der Versorgungsspannung mit 5V und andererseits an der Anschlußklemme eines Mikroprozessors.

Der Transistor T10 ist als npn-Transistor und der Transistor T20 als pnp-Transistor ausgelegt.

Das oben beschriebene Abschlußnetzwerk ist innerhalb des Bussystems nur einmal vorgesehen. D. h. also, die Busteilnehmer bzw. die Neztwerkschnittstellen 2 bis n haben kein Abschlußnetzwerk. Im übrigen entsprechen sie dem Teilnehmer 1, der im folgenden näher erläutert wird.

Jeder Teilnehmer weist ein Sendeteil S und ein Empfangsteil E auf.

Aus Gründen der besseren Übersichtlichkeit sind von der Netzwerkschnittstelle lediglich ein Teilnehmer auf einem CAN-IC, dessen externe Beschaltung sowie die beiden Signal- bzw. Busleitungen dargestellt. Der Teilnehmer weist eine erste Treiberstufe T1 auf, die der Busleitung U- zugeordnet ist. Zur Vereinfachung ist hier lediglich ein elektronischer Schalter der Treiberstufe dargestellt, der einerseits mit der Versorgungsspannung von +5V und andererseits mit einer Ausgangsklemme TX1 des CAN-IC's verbunden ist. Diese Klemme ist über eine Diode D1 und einen Widerstand R3 mit dem Knoten K11 verbunden, der seinerseits mit der Busleitung U- in Verbindung steht. Die Diode D1 ist so gepolt, daß ihre Annode an der Klemme TX1 liegt.

Wenn die Treiberstufe T1 niederohmig ist, liegt die Klemme TX1 also an der Versorgungsspannung mit +5V.

An der Klemme TX0 ist die zweite Treiberstufe T0 angeschlossen, von der zur Vereinfachung lediglich ein elektronischer Schalter dargestellt ist. Dieser liegt einerseits an Masse und andererseits an der Ausgangsklemme TX1, an der die Katode einer Diode T2 liegt, deren Annode über einen Widerstand R4 mit dem Knoten K01 verbunden ist, der seinerseits ein leitender Verbindung mit der Busleitung U+ steht.

Wenn die Treiberstufe T2 niederohmig ist, liegt die Klemme TX0 also an Masse. Die Treiberstufen T1 und T2 sind invers geschaltet. Sie werden über eine Steuerleitung SL angesteuert, wobei die Treiberstufe T1 unmittelbar mit der Steuerleitung verbunden ist und die Steuerleitung der Treiberstufe T0 über einen Inverter 21.

Aus Figur 2 ist die äupere Beschaltung des Empfangsteils des CAN-Bausteins ersichtlich. Bei der internen Beschaltung des Bausteins sind zur Vereinfachung der Darstellung die Komparatoren 5 und 7 sowie deren Beschaltung, die in Figur 1 genauer dargestellt sind, weggelassen.

Erkennbar ist jedoch an den Klemmen RX1 und RX0 liegende Komparator 1, der als Eingangskomparator dient und auf seiner Ausgangsleitung 3 das Empfangssignal entsprechend den auf den Busleitungen U- und U+ liegenden Imformationen abgibt.

Bei dieser Darstellung sind die beiden Schalter S1 und S0 nicht auf dem CAN-Baustein angeordnet. Ihre Funktion ist jedoch identisch mit den in Figur 1 dargestellten.

Die Klemme RX0 des Empfangsteils ist über den Umschaltkontakt des Schalter S0 an einen Knoten K02 geführt und von dort über einen Widerstand R10′ mit dem Knoten K01 und mit der Busleitung U+ verbunden. Die Eingangsklemme RX1 ist über einen Umschaltkontakt des Schalters S1 mit dem Knoten K12 und über den Widerstand R9 mit dem Knoten K11 und mit der Busleitung U- verbunden.

Die Knotenpunkte K12 und K02 sind über geeignete Widerstände mit der Bezugsspannung V_{cc}/2, also mit der Ausgangsleitung 17 des Operationsverstärkers 15 verbunden. Dabei ist ein Widerstand R7 zwischen dem Knoten K12 und der Bezugsspannung und ein Widerstand R8 zwischen dem Knoten K02 und der Bezugsspannung vorgesehen. Die Bezugsspannung ist, wie in Figur 1, an den Umschaltkontakt der Schalter S0 und S1 geführt. Diese Schalter sind wiederum einem hier nicht dargestellten Statusregister zugeordnet, das für die Umschaltung dieser Kontakte sorgt.

Parallel zu dem in Figur 2 dargestellten Komparator 1 liegen also die zusätzlichen Komparatoren 5 und 7, deren Ausgänge mit einer Auswertungsschaltung 9 verbunden sind, wie dies in Figur 1 dargestellt ist. Auch der Spannungsteiler 19 ist in Figur 2 auf dem CAN-Baustein vorgesehen. Sie wurde, wie gesagt, aus Gründen der besseren Übersichtlichkeit weggelassen.

Jeder der Teilnehmer 1 bis n ist mit den Busleitungen U- und U+ verbunden, wobei an der Busleitung U- ein Ausgangspotential von beispielsweise 1,5V und an der Busleitung U+ ein Potential 3,5V liegt.

Aus der Funktionsbeschreibung der in Figur 1 dargestellten Schaltung ist ersichtlich, daß die Teilnehmer 1 bis n des in Figur 2 dargestellten Bussystems bei einem auf den Busleitungen auftretenden Fehler auch dann aktiviert werden können, wenn dieser Fehler während der inaktiven Phase, also während des sleep-modes eintritt.

Durch das Abschlußnetzwerk des Teilnehmers 1 kann bei einem Kurzschluß zwischen den beiden Busleitungen U- und U+ die Busleitung U- abgeschaltet werden. D. h., über ein Steuersignal des Mikroprozessors wird der Transistor T20 in leitenden Zustand gebracht, so daß die Busleitung U- über den Widerstand R20 an Masse gelegt wird.

Dadurch ist es möglich, auch in diesem Fall, die auf den Busleitungen vorhandenen Informationen mit Hilfe des Empfangskomparators 1 auszuwerten.

## Patentansprüche

1. Netzwerkschnittstelle eines Computer-Netzwerks, insbesondere für ein Kraftfahrzeug, mit mindestens zwei Busleitungen, wobei die Netzwerkschnittstelle mindestens einen Empfangskomparator zum Differenzempfang von über die mindestens zwei Busleitungen gesendeten Daten aufweist, dadurch gekennzeichnet, daß eine den Busleitungen (U-, U+) und einer Bezugspannung (V_{cc}/2) zugeordnete Schaltung (5, 7, 9, 19) vorgesehen ist, die in einem inaktiven Zustand der Netzwerkschnittstelle jede einzelne Busleitung (U-, U+) auf das Eintreffen eines Flankenwechsels separat überwacht, und daß die Schaltung (5, 7, 9, 19) zur Aktivierung der Netzwerkschnittstelle ein Wake-up-Signal erzeugt, wenn auf mindestens einer der Busleitungen (U-, U+) ein Flankenwechsel erkannt wurde.

2. Netzwerkschnittstelle nach Anspruch 1, dadurch gekennzeichnet, daß die Schaltung mindestens zwei Komparatoren (5, 7) aufweist, deren erster Eingang einer der Busleitungen (U-, U+) und deren zweiter Eingang einer Bezugsspannung (V_{cc}/2) zugeordnet ist, und deren Ausgänge mit einer Auswertungsschaltung (9) verbunden sind.

3. Netzwerkschnittstelle nach Anspruch 2, dadurch gekennzeichnet, daß die Auswertungsschaltung als ODER-Gatter (9) ausgelegt ist, dessen Ausgang (11) bei Auftreten eines Flankenwechsels auf einer intakten Busleitung ein Wake-up-Signal abgibt.

4. Netzwerkschnittstelle nach Anspruch 2 oder 3, dadurch gekennzeichnet, daß ein Operationsverstärker (15) zur niederohmigen Referenzspannungs-Ankopplung vorgesehen ist und daß die Bezugsspannung (V_{cc}/2) über einen Spannungsteiler (19) an die zweiten Eingänge der Komparatoren (5, 7) gelegt ist.

5. Netzwerkschnittstelle nach Anspruch 4, dadurch gekennzeichnet, daß durch den Spannungsteiler (19) ein Spannungs-Offset zwischen den zweiten Eingängen der Komparatoren (5, 7) gelegt ist.

## Claims

1. Network interface of a computer network, in particular for a motor vehicle, with at least two bus lines, the network interface having at least one receiving comparator for the differential reception of data sent via the at least two bus lines, characterized in that a circuit (5, 7, 9, 19) is provided, which is assigned to the bus lines (U-, U+) and a reference voltage (V_{cc}/2) and, in an inactive state of the network interface, monitors each individual bus line (U-, U+) separately for the occurrence of an edge change, and in that the circuit (5, 7, 9, 19) generates a wake-up signal for activating the network interface whenever an edge change has been detected on at least one of the bus lines (U-, U+).

2. Network interface according to Claim 1, characterized in that the circuit has at least two comparators (5, 7), the first input of which is assigned to one of the bus lines (U-, U+) and the second input of which is assigned to a reference voltage (V_{cc}/2), and the outputs of which are connected to an evaluation circuit (9).

3. Network interface according to Claim 2, characterized in that the evaluation circuit is designed as an OR gate (9), the output (11) of which emits a wake-up signal on occurrence of an edge change on an intact bus line.

4. Network interface according to Claim 2 or 3, characterized in that an operational amplifier (15) is provided for low-resistance reference voltage coupling and in that the reference voltage (V_{cc}/2) is applied via a voltage divider (19) to the second inputs of the comparators (5, 7).

5. Network interface according to Claim 4, characterized in that a voltage offset is applied by the voltage divider (19) between the second inputs of the comparators (5, 7).

## Revendications

1. Interface de réseau pour un réseau d'ordinateur notamment d'un véhicule automobile avec au moins deux lignes de bus, l'interface de réseau comportant au moins un comparateur de réception pour la réception différenciée des données envoyées par au moins deux lignes de bus, interface caractérisée en ce qu'un circuit (5, 7, 9, 19) est associé à l'une des lignes de bus (U-, U+) et à une tension de référence (Vcc/2), qui surveille, l'état de repos de l'interface de réseau, chaque ligne de bus séparée (U-, U+), pour l'arrivée d'un changement de flanc et le circuit (5, 7, 9, 19) crée un signal de réveil pour activer l'interface de réseau lors de la détection d'au moins un changement de flanc sur l'une des lignes de bus (U-, U+).

2. Interface de réseau selon la revendication 1, caractérisée en ce que le circuit comprend au moins deux comparateurs (5, 7) et sa première entrée est associée à l'une des lignes de bus (U-, U+) et sa seconde entrée à une tension de référence (Vcc/2) et les sorties sont reliées à un circuit d'exploitation (9).

3. Interface de réseau selon la revendication 2, caractérisée en ce que le circuit d'exploitation est conçu comme porte OU (9) dont la sortie (11) émet un signal de réveil lors de l'arrivée d'un changement de flanc sur une ligne de bus intacte.

4. Interface de réseau selon la revendication 2 ou 3, caractérisée par un amplificateur opérationnel (15) pour le couplage de la tension de référence, de manière faiblement ohmique et la tension de référence (Vcc/2) est appliquée par un diviseur de tension (19) aux secondes entrées des comparateurs (5, 7).

5. Interface de réseau selon la revendication 4, caractérisée en ce que le diviseur de tension (19) applique un décalage de tension entre les deux entrées des comparateurs (5, 7).
